# EUROPÄISCHE PATENTSCHRIFT

(11) **EP 0 476 171 B1**
(45) Veröffentlichungstag und Bekanntmachung des Hinweises auf die Patenterteilung: **30.11.1994**
(21) Anmeldenummer: 90118087.7
(22) Anmeldetag: 20.09.1990
(51) Int. Cl.: H02G 3/06, F16L 25/00, F16L 33/26

(54) **Anschlusselement für mehrpolige elektrische Steckverbinder**
Connection element for multipolar electrical plug connector
Elément de connexion pour connecteur électrique multipolaire à fiche

(43) Veröffentlichungstag der Anmeldung: 25.03.1992
(73) Patentinhaber: Daimler-Benz Aerospace Airbus Gesellschaft mit beschränkter Haftung, 21129 Hamburg (DE)
(72) Erfinder: Kirma, Safa, D-2000 Wedel/Holstein (DE)
(74) Vertreter: Hansmann, Dierk, Dipl.-Ing.

(56) Entgegenhaltungen:
- DE-A- 3 104 518
- FR-A- 1 145 636
- GB-A- 2 089 919
- US-A- 1 796 062

## Beschreibung

Die Erfindung bezieht sich auf ein Anschlußelement für mehrpolige elektrische Steckverbinder, bestehend aus einem Übergangsteil mit einem steckverbindungsseitigen Ende und einem kabelseitigen Ende zum Anschluß von Kabelbäumen, die durch Schutzschläuche als Wellschläuche umgeben sind, wobei das Übergangsteil als Hohlkörper ausgebildet ist und einen zylindrischen Aufnahmebereich für eine Halterung des Steckverbinders aufweist.

Bei Anordnungen dieser Art besteht, insbesondere beim Einsatz in Flugzeugen, das Problem, daß das Einsetzen der Steckverbinder in entsprechende Geräte durch die entsprechenden Schutzschläuche erschwert wird und auf einem Raum mit einer Vielzahl von Steckverbindungsanschlüssen oftmals nicht durchführbar ist. Dabei ist von besonderer Bedeutung, daß bei Anordnungen mit Schutzschläuchen zur elektrischen Abschirmung oder für den Blitzschutz elektrische Verbindungen nicht durch die Anschlußelemente unterbrochen werden dürfen.

Nach der DE-PS 31 04 518 sind bereits Verbindungselemente für Wellschläuche aus Kunststoff und Metall bekannt. Hierbei soll eine mechanische Verbindung zur axialen Festlegung erfolgen und eine Verdrehung des Verbindungselementes gegenüber dem Wellschlauch ist nach Festlegung nicht vorgesehen. Somit ergeben sich bei einer Übertragung auf elektrische Anschlußelemente und entsprechender Kopplung mit feststehenden Teilen in einer vorgegebenen Stellung Probleme.

Die Aufgabe der Erfindung ist es, gattungsgemäße Anschlußelemente zu verbessern, die zur Herstellung elektrischer Verbindungen zum Schutz vor Überspannung und Blitzeinwirkungen gewährleisten und eine Verdrehung gegenüber angeschlossenen Schutzschläuchen in der Montagephase ermöglichen und im Endstadium eine gute elektrische Verbindung zwischen den einzelnen Elementen zu schaffen.
Die Lösung dieser Aufgabe erfolgt erfindungsgemäß dadurch, daß das dem Schutzschlauch für einen Schutz gegen elektromagnetische Störungen zugewandte Ende des Übergangsteils eine Aufnahme für ein Befestigungselement zur elektrischen Ableitung aufweist, das einen Endbereich des Schutzschlauches kraftschlüssig umgreift und daß das Befestigungselement drehfest über Spannelemente an der Aufnahme gehaltert ist.

Hierdurch wird mit einem einfachen Aufbau eine Verbindung mit dem Schutzschlauch montagefreundlich ermöglicht, um Verbindungen entsprechend der vorliegenden Kodierung aufzubauen und zu lösen sowie gleichzeitig eine gute elektrische Verbindung der einzelnen Elemente mit geringen Übergangswiderständen zum Schutz der Anordnungen herzustellen.

Vorteilhafte Ausgestaltungen der Erfindung sind durch die Merkmale der Unteransprüche gekennzeichnet.

In der Zeichnung sind Ausführungsbeispiele der Erfindung schematisch dargestellt. Es zeigen:

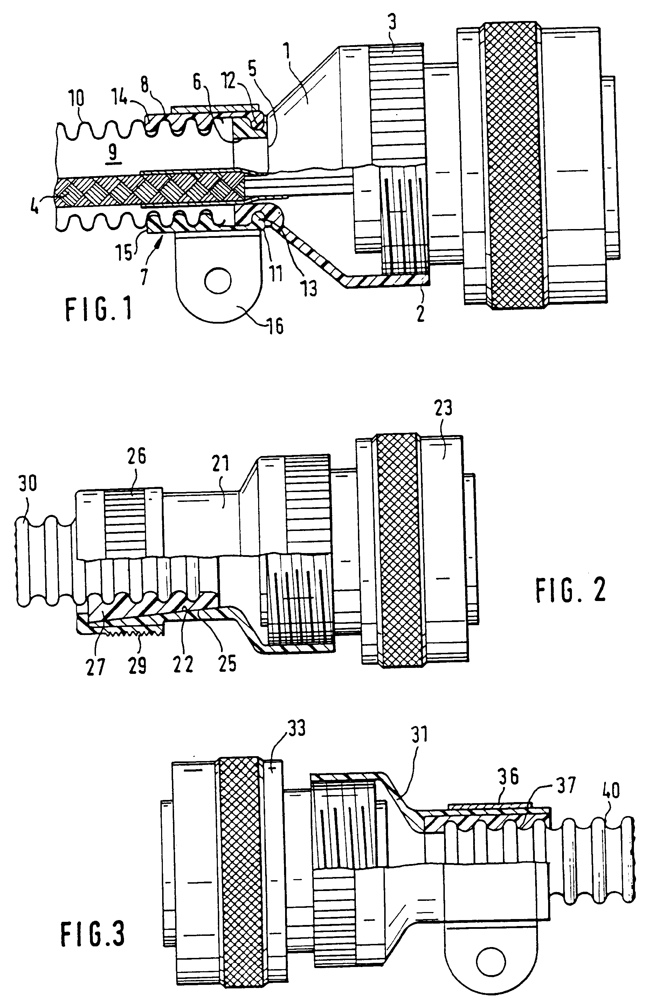

- Fig. 1 bis 12: unterschiedliche Ausführungsformen von Anschlußelementausbildungen mit verbundenen Schutzschläuchen.

Bei der Ausbildung gemäß Fig. 1 nimmt ein Schutzschlauch 10 in Form eines Wellringschlauches einen Kabelbaum 4 aus einzelnen Drähten auf, der an einem Steckverbinder 3 angeschlossen ist. Zur Verbindung zwischen Schutzschlauch 10 und Steckverbinder 3 ist ein Übergangsteil 1 als Hohlkörper angeordnet, das mit seinem einen Ende 2 über ein Gewinde mit dem Steckverbinder 3 koppelbar ist. Hierzu ist das Übergangsteil 1 mit seinem Ende 5 einem Ende 9 des Schutzschlauches 10 zugeordnet, indem ein Befestigungselement 7 den Schutzschlauch 10 kraftschlüssig umgreift und sein anderes Ende 11 mit einer Wulst 13 in eine umlaufende Nut 12 einer Aufnahme 6 am Übergangsteil 1 eingreift. Das Befestigungselement 7 besteht hierbei aus Halbschalen 14,15, die durch ein Spannelement 16 in Form einer Schelle zusammengehalten sind. Die Innenfläche des Befestigungselementes 7 ist entsprechend der Profilierung des Schutzschlauches 10 ausgebildet.

Zur Vormontage wird das Spannelement 16 als Schelle so weit angezogen, daß eine Drehbewegung zwischen dem Wulst 13 der Halbschalen 14, 15 der Nut 12 und der Aufnahme 6 am Übergangsteil 1 gewährleistet wird. Beim Einbau des Kabelbaums 4 im Flugzeug wird der kodierte Steckverbinder 3 mit den zugehörigen Anschlüssen gekoppelt. Da die Lage der Winkelanordnung der Kodierung von der Einbaulage der Anschlüsse vorbestimmt wird, müssen die Steckverbinder 3 beim Koppeln mit den Anschlüssen um die eigene Achse gedreht werden um so die richtige Lage der Kodierung zu finden. Ist die Lage gefunden, kann die Kopplung durchgeführt werden.

Danach wird das Spannelement 16 so fest angezogen, daß eine drehfeste Verbindung zwischen allen Elementen und dem Schutzschlauch 10 erzielt wird. Diese Verbindung gewährleistet kleine elektrische Übergangswiderstände und eine gute Abschirmung.

In einem weiteren Ausführungsbeispiel gemäß Fig. 2 ist ein Übergangsteil 21 angeordnet, das einen Steckverbinder 23 aufweist und ein mit dem Schutzschlauch 30 verbundenes Befestigungselement 27 besitzt.

Das Befestigungselement 27 wird von dem Übergangsteil 21 umfaßt, wobei die zugeordneten Flächen 22, 25 konisch ausgebildet sind und durch ein Schraubelement 26 am Übergangsteil 21 über ein Gewinde 29 eine Verspannung gegeneinander ermöglicht. Das Übergangsteil 21 ist gleichzeitig über ein Gewinde mit dem Steckverbinder 23 verbunden.

Bei der Montage wird das Übergangsteil 21 des Anschlußelementes über das Gewinde mit dem Steckverbinder 23 fest bis zum Anschlag angezogen. Das Befestigungselement 27 in Form von zwei Halbschalen wird um den Schlauch 30 gelegt und mit dem Übergangsteil 21 verbunden. Das Schraubelement 26 wird über ein Gewinde 29 so weit aufgesetzt, daß eine Drehbewegung zwischen den konischen Flächen 22 und 25 möglich ist. Nach der Kopplung des Steckverbinders 23 mit dem flugzeugfesten Anschluß und einer Zuordnung durch Verdrehen, wird das Schraubenelement 26 am Übergangsteil 21 bis zum Anschlag fest gezogen werden, um eine drehfeste Verbindung mit einem guten Kontakt einzustellen.

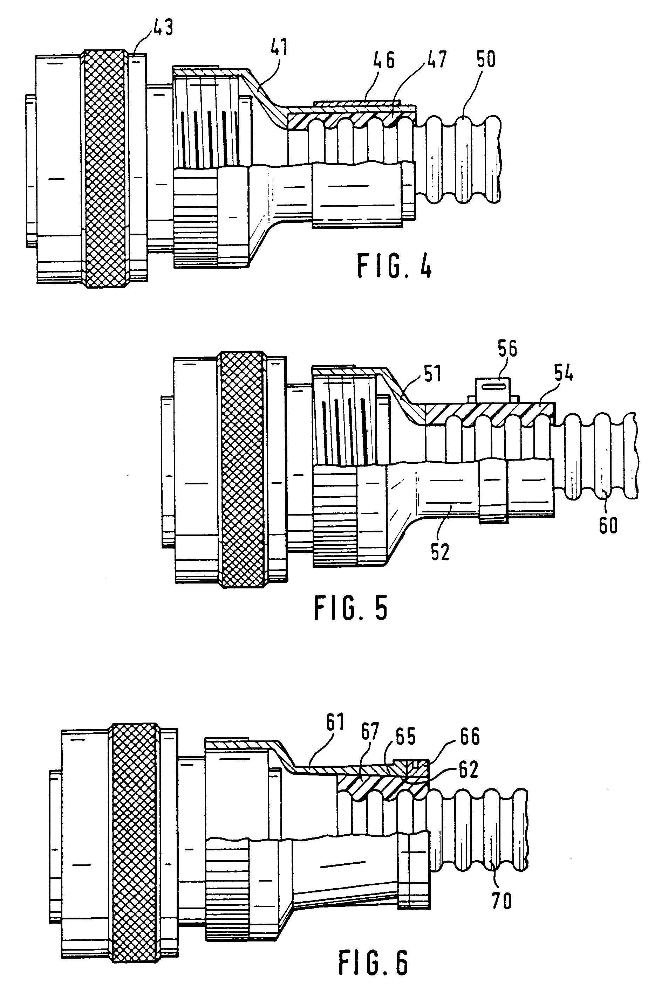

Gemäß Fig. 3 und 4 sind Ausführungen gezeigt, wobei das mit dem Steckverbinder 33, 43 verbundenes Übergangsteil 31, 41 ein entsprechendes Befestigungselement 37, 47 aufnimmt und durch ein Spannelement 36, 46 umfaßt wird, so daß der Schutzschlauch 40, 50 kraftschlüssig eingespannt ist.

In der Ausführung gemäß Fig. 5 ist das Übergangsteil 51 mit einer angeformten Halbschale 52 als Befestigungselement versehen, die mit einer aufsetzbaren losen Halbschale 55 korrespondiert und über ein die Halbschalen 52, 55 umfassendes Spannelement 56 der Schutzschlauch 60 einspannbar ist.

Bei diesen Anordnungen wird wie bei den anderen vorgenannten Ausführungen zuerst eine Verdrehung für eine ordnungsgemaße Verbindung ermöglicht und dann über die entsprechenden Elemente eine feste Verbindung mit guten elektrischen Kontakt eingestellt.

Ähnlich der Ausbildung gemäß Fig. 2 umfaßt gemäß Fig. 6 das Übergangsteil 61 das Befestigungselement 67, wobei die angeordneten Flächen 62, 65 konisch ausgebildet sind und ein verschiebbarer Klemmring 66 eine Verspannung durchführt und den aufgenommenen Schutzschlauch 70 festlegt.

Auch die nachstehenden Ausführungen ermöglichen zuerst eine Zuordnung des Steckverbinders zum flugzeugfesten Anschluß und anschließend eine drehfest Verbindung mit elektrischen Kontakt.

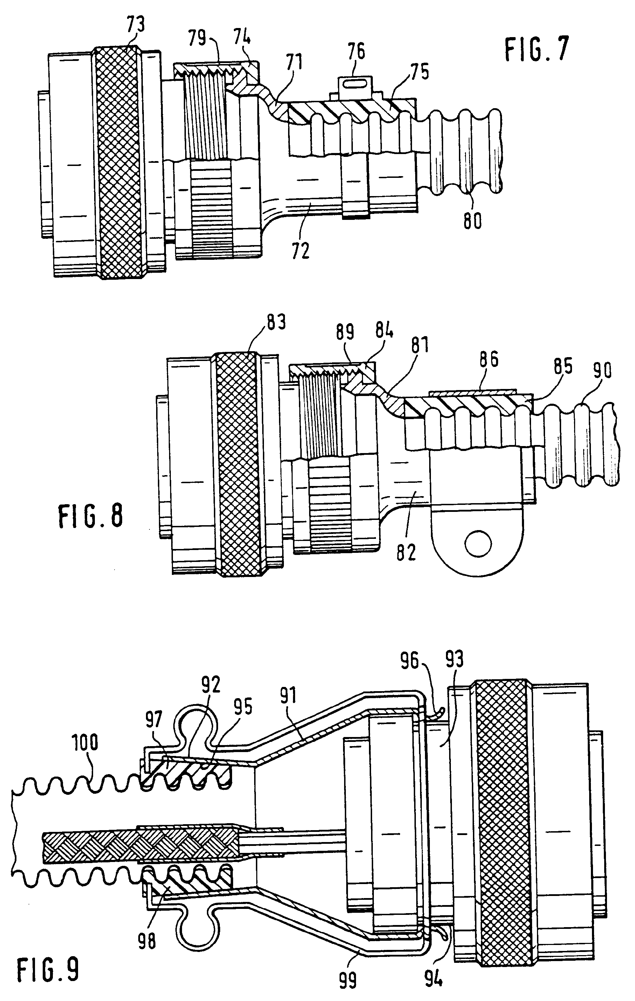

Gemäß Fig. 7 und 8 ist das Übergangsteil 71, 81 entsprechend Fig. 5 mit einer angeformten Halbschale 72, 82 als Befestigungselement versehen und besitzt eine aufsetzbare lose Halbschale 75, 85, die über einen Kabelbinder 76 bzw. einer Schelle 86 den Schutzschlauch 80, 90 einspannen. Hierbei ist über eine gesonderte Überwurfmutter 74,84 eine Gewinde Verbindung mit den Steckverbinder 73, 83 über einen zugeordneten flanschartigen Halterand 79, 89 des Steckverbinders 83 herstellen.

Hierbei kann zusätzlich zwischen Überwurfmutter 74, 84 im Bereich des Gewindes eine Verzahnung angeordnet sein um eine Verdrehsicherheit zu gewährleisten.

In der Ausbildung gemäß Fig. 9 ist ein übergangsteil 91 im Bereich der Befestigungselemente 97,98 für den Schutzschlauch 100 als Kegelhülse ausgebildet, wobei die Innenfläche 92 mit entsprechend zugeordneten Außenflächen 95 korrespondieren. Hierbei erfolgt eine Einspannung der Befestigungselemente 97, 98 über einen vom Steckverbinder 93 axial wirkenden federnden Drahtbügel 99. Der Übergangsteil 91 ist dabei über eine Nut 94 am Steckverbinder 93 durch eine einrastende federnde Endausbildung 96 gehaltert.

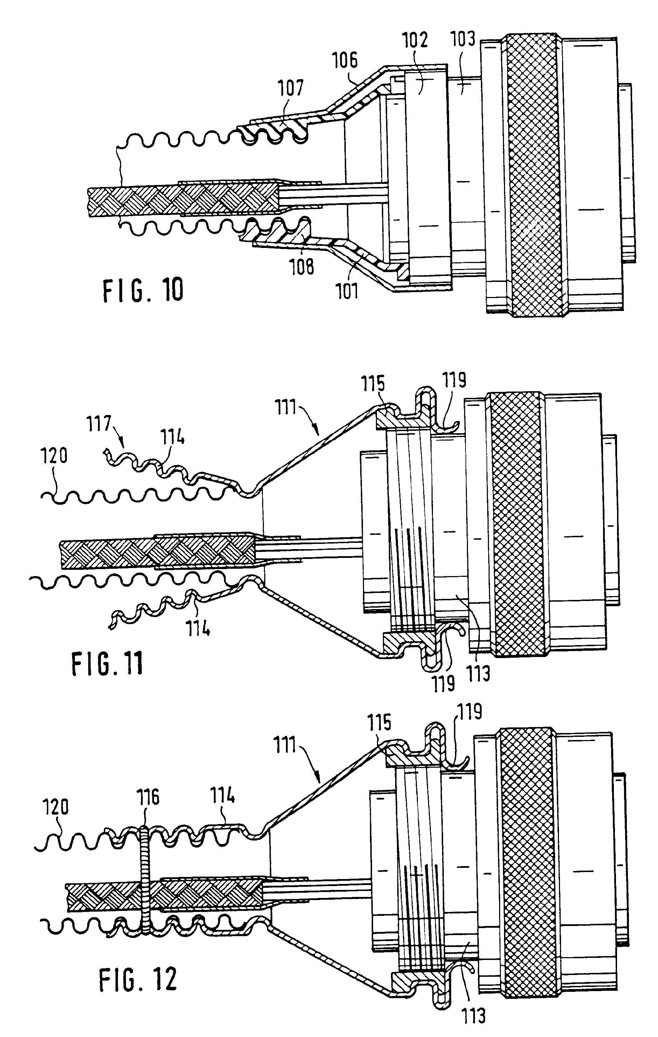

Eine Ausbildung ähnlich Fig. 9 ist in Fig. 10 dargestellt. Hierbei ist das Übergangsteil 101 mit entsprechenden Festigungselementen 107, 108 einstückig in Form von Halbschalen ausgebildet, die sich gegen den Steckverbinder 103 abstützen. Die Außenfläche im Bereich der Befestigungselemente 107, 108 ist wiederum konisch ausgeführt und wird durch eine aufsetzbare entsprechende Haltehülse 106, die auf einen Absatz 102 des Steckverbinders 103 festsetzbar ist, gehalten.

Gemäß Fig. 11 und 12 ist eine Ausbildung vor und nach der Verbindung mit einem Schutzschlauch 120 gezeigt. Der Steckverbinder 113 ist über ein Übergangsteil 111 mit dem Schutzschlauch 120 verbunden, das aus einem auf den Steckverbinder 113 aufschraubbaren Gewindering 115 gebildet ist und an seinem dem Schutzschlauch 120 zugewandten Ende über den Umfang verteilte Kontaktstreifen 114 als Befestigungselemente 117 trägt die über ein Spannelement 116 den Schutzschlauch 120 umfassen. Im Bereich des Steckverbinders 113 weist das Übergangsteil 111 anliegende Kontaktfedern 119 auf.

## Patentansprüche

1. Anschlußelement für mehrpolige elektrische Steckverbinder (3), bestehend aus einem Übergangsteil (1) mit einem steckverbindungsseitigen Ende und einem kabelseitigen Ende zum Anschluß von Kabelbäumen, die durch Schutzschläuche (10) als Wellschläuche umgeben sind, wobei das Übergangsteil (1) als Hohlkörper ausgebildet ist und einen zylindrischen Aufnahmebereich für eine Halterung des Steckverbinders (3) aufweist, dadurch gekennzeichnet, daß das dem Schutzschlauch (10) für einen Schutz gegen elektromagnetische Störungen zugewandte Ende (5) des Übergangsteils (1) eine Aufnahme (6) für ein Befestigungselement (7) zur elektrischen Ableitung aufweist, das einen Endbereich (9) des Schutzschlauches (10) kraftschlüssig umgreift und daß das Befestigungselement (7) drehfest über Spannelemente (16) an der Aufnahme (6) gehaltert ist.

2. Anschlußelement nach Anspruch 1, dadurch gekennzeichnet, daß die Aufnahme (6) für das Befestigungselement (7) eine umlaufende Nut (12) aufweist, in die eine Wulst (13) des die Aufnahme (6) umschließenden Befestigungselements (7) eingreift und über das schellenförmige Spannelement (16) als Ableitelement festlegbar ist.

3. Anschlußelement nach Anspruch 1 oder 2, dadurch gekennzeichnet, daß das Befestigungselement (21) als einstückiges Rohrelement ausgebildet ist.

4. Anschlußelement nach Anspruch 1 oder 2, dadurch gekennzeichnet, daß das Befestigungselement (7) aus zwei Halbschalen (14,15) besteht.

5. Anschlußelement nach einem der Ansprüche 1 bis 4, dadurch gekennzeichnet, daß die Innenfläche des Befestigungselementes (7) entsprechend der Profilierung des Schutzschlauches (10), wie ein Wellringschlauch bzw. Wendelschlauch, ausgebildet ist.

6. Anschlußelement nach einem der Ansprüche 1 bis 5, dadurch gekennzeichnet, daß das Übergangsteil (71,81) über einen flanschartigen Halterand (79,89) durch eine Überwurfmutter (84,94) am Steckverbinder (83,93) gehalten ist.

7. Anschlußelement nach einem der Ansprüche 1 bis 6, dadurch gekennzeichnet, daß das Übergangsteil (51) im Bereich des Befestigungselementes aus einer angeformten Halbschale (52) und einer losen Halbschale (59) besteht und der Schutzschlauch (60) über ein die Halbschalen (52,55) umfassendes Spannelement (56) einspannbar ist.

8. Anschlußelement nach einem der Ansprüche 1 bis 7, dadurch gekennzeichnet, daß die Innenfläche (25,65) des Übergangsteiles (21,61) als Kegelhülse im Bereich der zugeordneten Befestigungselemente (27,67) ausgebildet sind und die Befestigungselemente (27,67) mittels einer Verschraubung (26,66) axial gegenüber dem Befestigungselement (27,67) verschiebbar angeordnet sind.

9. Anschlußelement nach einem der Ansprüche 1 bis 7, dadurch gekennzeichnet, daß die Innenfläche (92) des Übergangsteiles (91) als Kegelhülse ausgebildet und zugeordnete Befestigungselemente (97,98) mit ihrer Außenfläche (95) entsprechend angepaßt sind, wobei die Befestigungselemente (97,98) mittels eines axial wirkenden federnden Drahtbügels (99) einspannbar sind.

10. Anschlußelement nach einem der Ansprüche 1 bis 9, dadurch gekennzeichnet, daß das Übergangsteil (101) gleichzeitig Befestigungselemente (107,108) zur Festlegung des Schutzschlauches aufweist, wobei das Übergangsteil (101) sich gegenüber dem Steckverbinder (103) abstützt und einen konischen Außenbereich aufweist und das Übergangsteil (101) im Bereich der Befestigungselemente (107,108) durch eine zugeordnete Haltehülse (106) fixierbar und an dem Steckverbinder (103) festlegbar ist.

11. Anschlußelement nach einem der Ansprüche 1 bis 10, dadurch gekennzeichnet, daß das Übergangsteil (111) durch einen mit dem Steckverbinder (113) korrespondierenden Gewindering (115) gebildet ist, der an seinen dem Schutzschlauch (120) zugewandten Ende über den Umfang verteilte Kontaktstreifen (114) als Befestigungselemente aufweist, die über ein Spannelement (116) festgelegbar und an der dem Steckverbinder (113) zugewandten Seite des Übergangsteils (111) Kontaktfedern (119) zum Steckverbinder (113) ausgebildet sind.

## Claims

1. Terminating element for multi-pole electric plugs (3) consisting of a transition part (1) having a plug-side end and a cable-side end for the termination of cable harnesses that are surrounded by protective sleeves (10) formed as corrugated sleeves, wherein the transition part (1) is formed as a hollow body and has a cylindrical reception area for a mounting part of the electric plug (3), characterised in that, the end (5) of the transition part (1) which faces the protective sleeve (10) for protection against electromagnetic interference has a receptacle (6) for an attachment element (7) for the electrical conduction, which element frictionally grips around an end region (9) of the protective sleeve (10) and that the attachment element (7) is held against rotation in the receptacle (6) by clamping elements (16).

2. Terminating element in accordance with Claim 1, characterised in that, the receptacle (6) for the attachment element (7) comprises a circular groove (12) into which a bead (13) of the attachment element (7) surrounding the receptacle (6) engages and can be restricted by the sliding-tap-like clamping element (16) acting as a discharge element.

3. Terminating element in accordance with Claim 1 or 2, characterised in that, the attachment element (21) is formed as a single piece tubular element.

4. Terminating element in accordance with Claim 1 or 2, characterised in that, the attachment element (7) consists of two half shells (14, 15).

5. Terminating element in accordance with any of the Claims 1 to 4, characterised in that, the inner surface of the attachment element (7) is formed in correspondence with the contour of the protective sleeve (10) as a corrugated ring sleeve or as a helical sleeve.

6. Terminating element in accordance with any of the Claims 1 to 5, characterised in that, the transition part (71, 81) is held on the plug (83, 93) via a flange-like retaining means (79, 89) by a screwed cap (84, 94).

7. Terminating element in accordance with any of the Claims 1 to 6, characterised in that, the transition part (51) in the vicinity of the attachment element consists of a moulded half shell (52) and a loose half shell (59) and the protective sleeve (60) can be clamped by a clamping element (56) which surrounds the half shells (52, 55).

8. Terminating element in accordance with any of the Claims 1 to 7, characterised in that, the inner surfaces (25, 65) of the transition part (21, 61) are formed as tapered sleeves in the vicinity of the associated attachment elements (27, 67) and the attachment elements (27, 67) are arranged to be axially displacable by means of a screw means (26, 66) relative to the attachment element (27, 67).

9. Terminating element in accordance with any of the Claims 1 to 7, characterised in that, the inner surfaces (92) of the transition part (91) are formed as tapered sleeves and the associated attachment elements (97, 98) are correspondingly matched at their outer surfaces (95) whereby the attachment elements (97, 98) can be clamped by means of an axially effective resilient wire strap (99).

10. Terminating element in accordance with any of the Claims 1 to 9, characterised in that, the transition part (101) simultaneously has attachment elements (107, 108) for restricting the protective sleeve whereby the transition part (101) is supported with respect to the plug (103) and has a conical outer region and the transition part (101) can be fixed in the vicinity of the attachment elements (107, 108) by an associated retaining sleeve (106) and can be fixed to the plug (103).

11. Terminating element in accordance with any of the Claims 1 to 10, characterised in that, the transition part (111) is formed by a ring nut (115) corresponding to the plug (113) which has contact strips (114) distributed over the periphery at its end facing the protective sleeve (120), which contact strips form attachment elements that can be restricted by a clamping element (116) and are formed as contact springs (119) for the plug (113) at the side of the transition part (111) facing the plug (113).

## Revendications

1. Elément de raccordement pour un connecteur (3) électrique multipolaire, composé d'une pièce de transition (1) ayant une extrémité située du côté du connecteur et une extrémité située du côté du câble pour le raccordement de faisceaux de câble, entourés par des tubes de protection (10) en forme de tubes annelés, la pièce de transition (1) étant un corps creux ayant une zone formant logement cylindrique pour fixer le connecteur (3), élément caractérisé en ce que l'extrémité (5) de la pièce de transition (10), tournée vers le tube de protection (10) et assurant une protection contre les parasites électromagnétiques, comporte un moyen de réception (6) pour un élément de fixation (7) de liaison électrique, qui entoure par une liaison par la force, une zone d'extrémité (9) du tube de protection (10) et l'élément de fixation (7) est maintenu solidairement en rotation sur le moyen de réception (6) par des éléments de serrage (16).

2. Elément de raccordement selon la revendication 1, caractérisé en ce que le moyen de réception (6) de l'élément de fixation (7) comporte une rainure périphérique (12) dans laquelle vient prendre un bourrelet (13) de l'élément de fixation (7) entourant le moyen de réception (6) et est fixé comme élément de liaison par un élément de serrage (16) en forme de collier.

3. Elément de raccordement selon la revendication 1 ou 2, caractérisé en ce que l'élément de fixation (21) est un élément tubulaire en une seule pièce.

4. Elément de raccordement selon la revendication 1 ou 2, caractérisé en ce que l'élément de fixation (7) est formé de deux demi-coquilles (14, 15).

5. Elément de raccordement selon les revendications 1 à 4, caractérisé en ce que la surface intérieure de l'élément de fixation (7) est réalisée suivant le profil du tube de protection (10), tel qu'un tube annelé ou un tube en spirale.

6. Elément de raccordement selon l'une des revendications 1 à 5, caractérisé en ce que la pièce de transition (71, 81) est maintenue sur le connecteur (83, 93) par un écrou chapeau (84, 94) par l'intermédiaire d'un bord de fixation en forme de bride (79, 89).

7. Elément de raccordement selon l'une des revendications 1 à 6, caractérisé en ce que la pièce de transition (51) se compose, au niveau de l'élément de fixation, d'une demi-coquille (52), moulée et d'une demi-coquille (53), libre et le tube de protection (60) se fixe par un élément de serrage (56) entourant les demi-coquilles (52, 55).

8. Elément de raccordement selon l'une des revendications 1 à 7, caractérisé en ce que la surface intérieure (25, 65) de la pièce de transition (21, 61) est réalisée sous la forme d'une douille conique au niveau des éléments de fixation (27, 67) associés et les éléments de fixation (27, 67) sont montés coulissants axialement par l'intermédiaire d'un vissage (26, 66) par rapport aux éléments de fixation (27, 67).

9. Elément de raccordement selon l'une des revendications 1 à 7, caractérisé en ce que la surface intérieure (92) de la pièce de transition (91) est une douille conique et les éléments de fixation (97, 98) associés sont adaptés de manière correspondante par leur surface extérieure (95), les éléments de fixation (97, 98) se serrant à l'aide d'un étrier à fil (99) élastique à effet axial.

10. Elément de raccordement selon l'une des revendications 1 à 9, caractérisé en ce que la pièce de transition (101) comporte en même temps des éléments de fixation (107, 108) pour fixer le tube de protection, la pièce de transition (101) s'appuyant sur le connecteur (103) et comportant une zone extérieure conique, la pièce de transition (101) pouvant être fixée au niveau des éléments de fixation (107, 108) par une douille de fixation (106) correspondante pour être bloquée sur le connecteur (103).

11. Elément de raccordement selon l'une des revendications 1 à 10, caractérisé en ce que la pièce de transition (111) est formée par une bague filetée (115) correspondant au connecteur (113), cette bague ayant à son extrémité tournée vers le tube de protection (120), des bandes de contact (114), réparties à la périphérie, constituant les éléments de fixation qui se bloquent par un élément de serrage (116) et du côté tourné vers le connecteur (113), la pièce de transition (111) comporte des ressorts de contact (119) pour le connecteur (113).
